# EUROPÄISCHE PATENTSCHRIFT

(11) **EP 3 984 788 B1**
(45) Veröffentlichungstag und Bekanntmachung des Hinweises auf die Patenterteilung: **22.04.2026**
(21) Anmeldenummer: 20201671.3
(22) Anmeldetag: 14.10.2020
(51) Int. Cl.: B60D 5/00, B61D 17/22

(54) **ÜBERGANGSEINRICHTUNG MIT EINER ABDECKUNG FÜR EINEN VERBINDUNGSKANAL**
TRANSITION DEVICE WITH A COVER FOR A CONNECTING DUCT
DISPOSITIF DE TRANSITION DOTÉ D'UN COUVERCLE POUR UN CANAL DE RACCORDEMENT

(43) Veröffentlichungstag der Anmeldung: 20.04.2022
(73) Patentinhaber: Hübner GmbH & Co. KG, 34123 Kassel (DE)
(72) Erfinder: Baake, Achim, 34479 Breuna (DE); Staszak, Przemyslaw, 34253 Lohfelden (DE)

(56) Entgegenhaltungen:
- EP-A1- 2 322 364
- EP-A1- 2 468 600
- EP-B1- 2 468 600
- DE-A1- 10 208 557
- DE-A1- 3 342 107
- DE-C2- 3 342 107
- KR-B1- 101 841 628

## Beschreibung

Die Erfindung betrifft eine Übergangseinrichtung zur Anordnung zwischen zwei beweglich miteinander verbundenen Fahrzeugen oder Fahrzeugteilen mit den Merkmalen des Oberbegriffs von Anspruch 1.

### STAND DER TECHNIK

Es ist bekannt, bei einer Übergangseinrichtung zwischen zwei beweglich miteinander verbundenen Fahrzeugen einen von dem Durchgangsbereich abgetrennten Verbindungskanal vorzusehen, um so eine Verbindung zwischen zwei Versorgungskanälen der miteinander verbundenen Fahrzeuge zu schaffen. Z. B. kann dies für eine Luftführung von klimatisierter Luft zwischen den Fahrzeugen erforderlich sein. Der Verbindungskanal kann auch dazu genutzt werden, um - für Fahrgäste unzugänglich - Versorgungsleitungen von dem einen Fahrzeug zum anderen Fahrzeug zu führen. Üblicherweise wird hierzu eine Zwischendecke in der Übergangseinrichtung eingezogen. Die Zwischendecke kann dabei aus mehreren 20 hintereinander angeordneten Bögen oder Röhren aus Balgmaterial hergestellt sein, welche an den Seitenwänden eines den Durchgangsbereich umschließenden Balgs angenäht sind. Zur Stabilisierung der Zwischendecke kommen Aluminiumprofile zum Einsatz, die jeweils benachbarte Bögen oder Röhren aus dem Balgmaterial aufnehmen.

Aus dem Dokument EP 2 468 600 B1 ist eine Übergangseinrichtung mit einem Innenbalg und einem demgegenüber beabstandet angeordneten Außenbalg bekannt. Im Deckenbereich erstrecken sich beabstandet zueinander zwei Wände von dem Innenbalg zu dem Außenbalg, so dass insgesamt ein vom dem Innenbalg, dem Außenbalg und den zwei Wänden begrenzter Verbindungskanal geschaffen wird.

Aus dem Dokument EP 2 942 255 B1 ist eine Übergangseinrichtung bekannt, bei der ein Verbindungskanal nicht im Deckenbereich vorgesehen, sondern im Bereich einer seitlich angeordneten Bodenabdeckung integriert ist. Dazu ist die seitlich von dem Balg abragende Bodenabdeckung an seinem unteren Ende durch einen Bodeneinsatz mit dem Balg verbunden, so dass sich insgesamt ein geschlossener Kanal ergibt.

Weitere Verbindungskanäle sind aus der DE 33 42 107 A1, der EP 2 322 364 A1 und der DE 102 08 557 A1 bekannt.

### OFFENBARUNG DER ERFINDUNG

Aufgabe der Erfindung ist es, eine Übergangseinrichtung aufzuzeigen, bei der sich ein von dem Durchgangsbereich abgetrennter Verbindungskanal mit weniger Material- und/oder Montageaufwand integrieren lässt, insbesondere ohne die Dichtigkeit der Abtrennung zu reduzieren, sondern diese im Idealfall sogar zu verbessern.

Die erfindungsgemäße Aufgabe wird gelöst durch eine Übergangseinrichtung mit den Merkmalen des unabhängigen Anspruchs 1.

Erfindungsgemäß wurde erkannt, dass ein Verbindungskanal auf einfache Weise im Deckenbereich einer Übergangseinrichtung geschaffen werden kann, indem eine von einem Balg der Übergangseinrichtung separate Abdeckung in dem Deckenbereich an dem Balg montiert wird. Die Abdeckung schließt dabei - anders als bei einer Zwischendecke, wie sie aus dem Stand der Technik bekannt ist - nicht an die Seitenwände des Balgs, sondern direkt an dessen Deckenabschnitt an. So kann ein größerer Durchgangsbereich geschaffen werden. Gleichzeitig bleiben die Abmessungen des Verbindungskanals ausreichend groß z. B. für die Luftführung und/oder Leitungsführung von einem Fahrzeugteil zum nächsten Fahrzeugteil.

Eine erfindungsgemäße Übergangseinrichtung ist dazu vorgesehen, zwei Fahrzeuge eines Fahrzeugverbunds oder zwei Fahrzeugteile eines mehrgliedrigen Fahrzeugs beweglich miteinander zu verbinden. Beispielsweise kann es sich um miteinander gekuppelte oder durch ein Gelenk miteinander verbundene Fahrzeuge oder Fahrzeugteile eines Schienenfahrzeugs handeln.

Die Übergangseinrichtung weist einen Balg auf, der einen Durchgangsbereich der Übergangseinrichtung umschließt. Durch den Durchgangsbereich können Fahrgäste von einem Fahrzeug bzw. Fahrzeugteil zum nächsten Fahrzeug bzw. Fahrzeugteil gelangen. Bei dem Balg kann es sich um einen Wellen- oder Faltenbalg handeln. Je nach Anwendungsfall kann der Balg zweischichtig ausgebildet sein mit einem Innen-und einem Außenbalg. Ferner kann der Balg und/oder eine seiner Schichten umlaufend oder nur teilweise umschlossen ausgebildet sein. Insbesondere kann der Balg im Bodenabschnitt offen gestaltet sein, wobei der Durchgangsbereich nach unten hin von einer von dem Balg separaten Bodenplattform der Übergangseinrichtung begrenzt wird.

Um an der Übergangseinrichtung endende Versorgungskanäle der Fahrzeuge bzw. Fahrzeugteile miteinander verbinden zu können, weist die Übergangseinrichtung einen Verbindungskanal auf. Die an den Fahrzeugen vorgesehenen Versorgungskanäle sind üblicherweise im Deckenbereich angeordnet. Der Verbindungskanal ist daher im Deckenbereich der Übergangseinrichtung angeordnet, schließt dort an die Versorgungskanäle an und erstreckt sich in Durchgangsrichtung von der einen Stirnseite der Übergangseinrichtung zur gegenüberliegenden Stirnseite und stellt so eine Verbindung zwischen den beiden Versorgungskanälen her. Der Verbindungskanal ist dabei von dem Durchgangsbereich abgetrennt. So kann z. B. eine gezielte Luftführung über die Übergangseinrichtung hinweg von einem Fahrzeugteil zum Nächsten gewährleistet werden und/oder es können Leitungen für Passagiere unzugänglich durch die Übergangseinrichtung geführt werden.

Der Verbindungskanal ist erfindungsgemäß durch eine Abdeckung begrenzt, welche ein Deckenelement und zwei Seitenwandelemente aufweist, die - quer zu der Durchgangsrichtung gesehen - seitlich von dem Deckenelement abragen. Die Seitenwandelemente erstrecken sich dabei bis zu dem Deckenabschnitt des Balgs und sind dort derart angeschlossen, dass der Verbindungskanal umlaufend geschlossen ist. Insgesamt wird der Verbindungskanal somit von der Abdeckung und dem Deckenabschnitt des Balgs begrenzt und von dem Durchgangsbereich abgetrennt.

Es handelt sich bei der Abdeckung - anders als aus dem Stand der Technik bekannt - nicht um ein durchgehendes Deckenelement, welches an Seitenabschnitte des Balgs anschließt. Vielmehr wird durch die Seitenwandelemente ein Anschluss an den Deckenabschnitt des Balgs geschaffen. Diese Ausgestaltung der Abdeckung bietet verschiedene Vorteile. Zum Beispiel kann aufgrund der Tatsache, dass die Abdeckung an den Deckenabschnitt des Balgs anschließt und sich somit nicht über die volle Breite des Balgs erstreckt, Material eingespart werden. Auch lässt sich eine Anbindung im Deckenbereich leichter realisieren, so dass sich der Montageaufwand verringert. Ferner lässt sich eine abdichtende Anbindung der Abdeckung an den Balg und somit eine dichte Verbindung zwischen den Versorgungskanälen leichter erreichen bzw. diese weist eine geringere Fehleranfälligkeit auf, da die dynamische Beanspruchung im Deckenbereich geringer ist als z. B. in den Seitenbereichen der Übergangseinrichtung.

Die Abdeckung ist erfindungsgemäß als eine von dem Balg separate Haube ausgebildet. Dazu ist erfindungsgemäß die Abdeckung durch ein oder mehrere Verbindungsmittel mit einem oder mehreren Balgrahmen des Balgs verbunden. Diese kann also nachträglich an einen Balg montiert werden, um so den Verbindungskanal zu schaffen. Da die Abdeckung lösbar befestigt ist, lässt sich der Verbindungskanal für Wartungszwecke auf einfache Weise öffnen und anschließend wieder verschließen. Auch kann die Abdeckung so im Bedarfsfall auf einfache Weise ausgetauscht werden.

Erfindungsgemäß ist es erforderlich, dass der Verbindungskanal gegenüber dem Durchgangsbereich luftdicht von diesem abgetrennt ist oder dass ein Luftaustausch zumindest nur in einem geringen Umfang stattfindet. Dies ist beispielsweise der Fall, wenn der Verbindungskanal als Luftführungskanal genutzt wird. Daher ist erfindungsgemäß vorgesehen, dass jedes Seitenwandelement einen Dichtungsabschnitt aufweist für einen dichten oder zumindest nahezu dichten Anschluss des jeweiligen Seitenwandelements an den Deckenabschnitt des Balgs. Dazu ist vorgesehen, dass der Dichtungsabschnitt mit dem Deckenabschnitt des Balgs überlappt und zwar derart, dass der Verbindungskanal seitlich geschlossen ist. Der Dichtungsabschnitt bildet dabei eine Art Stulpe, die auf dem Deckenabschnitt im Wesentlichen spaltfrei aufliegt. D. h. der Anschluss der Abdeckung an den Deckenabschnitt derart, dass der Verbindungskanal umlaufend geschlossen ist, wird letztlich durch einen Materialüberlapp der Abdeckung, nämlich des Dichtungsabschnitts, und dem Deckenabschnitt des Balgs erreicht.

Die Abdeckung kann innerhalb des von dem Balg umschlossen Bereichs angeordnet sein, wobei die Seitenwandelemente entsprechend auf der innenliegenden Seite an den Deckenabschnitt des Balgs angeschlossen sind. Alternativ kann die Abdeckung von außen auf den Balg aufgesetzt sein, wobei die Seitenwandelemente entsprechend auf einer außenliegenden Seite an den Deckenabschnitt des Balgs anschließen.

Die Übergangseinrichtung ist dazu ausgelegt, Relativbewegungen zwischen den Fahrzeugen bzw. Fahrzeugteilen zu ermöglichen, wie Wank-, Knick-, Nickbewegungen oder auch einen Quer- oder Höhenversatz. Entsprechend muss auch die Abdeckung derartigen Bewegungen ermöglichen und folgen können. Daher weist die Abdeckung gemäß einer Ausführungsform eine Mehrzahl von Bahnen aus Balgmaterial auf, welche das Deckenelement und die Seitenwandelemente bilden und welche eine Wellen- oder Faltenform aufweisen. Die Bahnen aus Balgmaterial weisen dabei insbesondere eine dem Balg entsprechende Wellen- oder Faltenform auf. Die Wellen- oder Faltenform muss dabei nicht zwingend identisch sein. Z. B. können die Bahnen aus Balgmaterial der Abdeckung von dem Durchgangsbereich aus gesehen konkav geformt sein, während die Wellen des Balgs von dem Durchgangsbereich aus gesehen konvex geformt sind. Vorzugsweise ist zumindest die Wellen- oder Faltentiefe bei der Abdeckung im Wesentlichen gleich zu der Wellen- oder Faltentiefe bei dem Balg. So können gleiche oder zumindest ähnliche dynamische Eigenschaften erreicht werden.

Die einzelnen Bahnen aus Balgmaterial, die die Wellen oder Falten bilden, können miteinander vernäht sein, so dass eine insgesamt durchgehende Abdeckung gebildet wird. Alternativ oder zusätzlich können die Bahnen aus Balgmaterial mittels Halterahmen verbunden sein. Konkret kann die Abdeckung dazu eine Mehrzahl von Halterahmen aufweisen, wobei zwei benachbarte Halterahmen jeweils eine Bahn aus Balgmaterial aufnehmen. Im Sinne der Ausgestaltung der Abdeckung als Haube können die Halterahmen insbesondere eine U-Form aufweisen.

Die Dichtungsabschnitte können integral von den Bahnen aus Balgmaterial ausgebildet sein. Eine besonders gute Abdichtung des Verbindungskanals gegenüber dem Durchgangsbereich kann dabei erreicht werden, wenn die Zahl an Verbindungsstellen möglichst gering gehalten wird. Daher ist gemäß einer Ausführungsform vorgesehen, dass die Bahnen aus Balgmaterial durchgehend ausgebildet sind von dem einen Dichtungsabschnitt über das Seitenwandelement, das Deckenelement, das gegenüberliegende Seitenwandelement zu dem sich daran anschließenden Dichtungsabschnitt.

Für eine dichte Anbindung der Abdeckung an den Deckenabschnitt des Balgs weisen die Dichtungsabschnitte vorzugsweise eine dem Balg entsprechende Wellen- oder Faltenform auf. So können Dichtungsabschnitte der Grundkontur des Balgs folgend im Bereich des Deckenabschnitts auf diesem wellen- oder faltenförmig aufliegen. Im Idealfall kann eine Spaltbildung zwischen dem Dichtungsabschnitt der Abdeckung und dem Deckenabschnitt des Balgs dabei vollständig oder zumindest weitgehend vermieden werden.

Dabei ist die Wellen- oder Faltenform der Dichtungsabschnitte ist insbesondere entgegengesetzt orientiert zu der Wellen- oder Faltenform des sich jeweils daran anschließenden Abschnitts der Bahn aus Balgmaterial. Die Bahn aus Balgmaterial bzw. die daraus geformte Welle oder Falte wird für die Bildung des Dichtungsabschnitts sozusagen umgeklappt, wodurch auf besonders einfache Weise ein unterbrechungsfreier Übergang zwischen dem an dem Deckenabschnitt des Balgs anliegenden Dichtungsabschnitt und dem Seitenwandelement der Abdeckung geschaffen werden kann.

Wenn das Seitenwandelement der Abdeckung bzw. der Dichtungsabschnitt mit einer gewissen Spannung gegen den Deckenabschnitt des Balgs anliegen, kann dies für einen dichten Abschluss des Verbindungskanals bereits ausreichend sein. Gemäß einer Ausführungsform ist ein Dichtmittel zur abdichtenden Verbindung des Seitenwandelements und insbesondere des Dichtungsabschnitts mit dem Balg vorgesehen. Konkret kann es sich um ein elastomer- oder silikonbasiertes Dichtmittel handeln, welches in flüssiger Form im Anschlussbereich zwischen dem Seitenwandelement bzw. dem Dichtungsabschnitt und dem Deckenabschnitt des Balgs aufgetragen und durch Vulkanisieren oder Trocknen vernetzt wird, wodurch letztlich ein dichter Anschluss erreicht wird. Es können auch andere Dichtmittel zum Einsatz kommen. Z. B. kann das Dichtmittel in der Art eines Fugenbandes zwischen dem Seitenwandelement bzw. dem Dichtungsabschnitt und dem Deckenabschnitt des Balgs angeordnet sein.

Das Gewicht der Abdeckung wird vorzugsweise hauptsächlich von dem Balg und insbesondere dessen Balgrahmen getragen. Dazu ist erfindungsgemäß die Abdeckung durch ein oder mehrere Verbindungsmittel mit einem oder mehreren Balgrahmen des Balgs verbunden.

Konkret kann die Abdeckung eine der Zahl der Balgrahmen entsprechende Zahl an Halterahmen aufweisen, wobei jeweils ein Balgrahmen mit jeweils einem Halterahmen verbunden ist. Für die Verbindung mit dem jeweils zugeordneten Halterahmen sind an jedem Balgrahmen vorzugsweise zumindest zwei Verbindungsmittel vorgesehen, so dass der Halterahmen auf beiden - quer zur Durchgangsrichtung gesehen - gegenüberliegenden Seiten mit dem Balgrahmen verbunden werden kann.

Das Verbindungsmittel kann z. B. ein Halteblech umfassen, von dem ein Ende in den Balgrahmen eingesteckt und dort z. B. durch Nieten mit dem Balgrahmen verbunden und/oder in dem Balgrahmen eingeklemmt ist. Das andere Ende des Halteblechs kann von dem Balgrahmen abragen und insbesondere über den Deckenabschnitt des Balgs überstehen. Das Halteblech ist somit für die Montage der Abdeckung leicht zugänglich. Die Befestigung des Halterahmens an dem Halteblech kann ebenfalls durch Nieten erfolgen. Es sind jedoch auch andere Arten der Befestigung wie Verschrauben u. ä. möglich.

Zum Anbinden der Abdeckung an das jeweilige Fahrzeug bzw. Fahrzeugteil kann die Abdeckung in Durchgangsrichtung gesehen stirnseitig einen Anschraubrahmen aufweisen. Der Anschraubrahmen kann z. B. mittels einer Schraubverbindung an einer Stirnseite des Fahrzeugs bzw. Fahrzeugteils befestigt werden. Er kann jedoch auch auf andere Weise daran befestigt sein. Für eine abdichtende Verbindung kann der Anschraubrahmen zusätzlich ein Dichtmittel aufweisen, welches im montierten Zustand dichtend an der Stirnseite des Fahrzeugs bzw. Fahrzeugteils anliegt.

Für weitere bevorzugte Ausgestaltungen der erfindungsgemäßen Abdeckung gelten die Ausführungen zu der erfindungsgemäßen Übergangseinrichtung entsprechend.

Vorteilhafte Weiterbildungen der Erfindung ergeben sich aus den Ansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Die in den Ansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Begriffs "mindestens" bedarf. Wenn also beispielsweise von einem Halterahmen die Rede ist, so ist dies so zu verstehen, dass genau ein Halterahmen, zwei Halterahmen oder mehrere Halterahmen vorhanden sind. Diese Merkmale können durch andere Merkmale ergänzt werden oder die einzigen Merkmale sein, aus denen das jeweilige Erzeugnis besteht. Die in den Ansprüchen enthaltenen Bezugszeichen stellen keine Beschränkung des Umfangs der durch die Ansprüche geschützten Gegenstände dar. Sie dienen lediglich dem Zweck, die Ansprüche leichter verständlich zu machen.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1: eine erfindungsgemäße Übergangseinrichtung in einer Frontansicht;
- Figur 2: die Übergangseinrichtung gemäß Figur 1 in einer perspektivischen Ansicht;
- Figur 3: eine Detailansicht des Deckenbereichs der Übergangseinrichtung gemäß Figur 1;
- Figur 4: einen Ausschnitt der Figur 3;
- Figur 5: die Anbindung einer Abdeckung an einem Balg in einer Detailansicht.

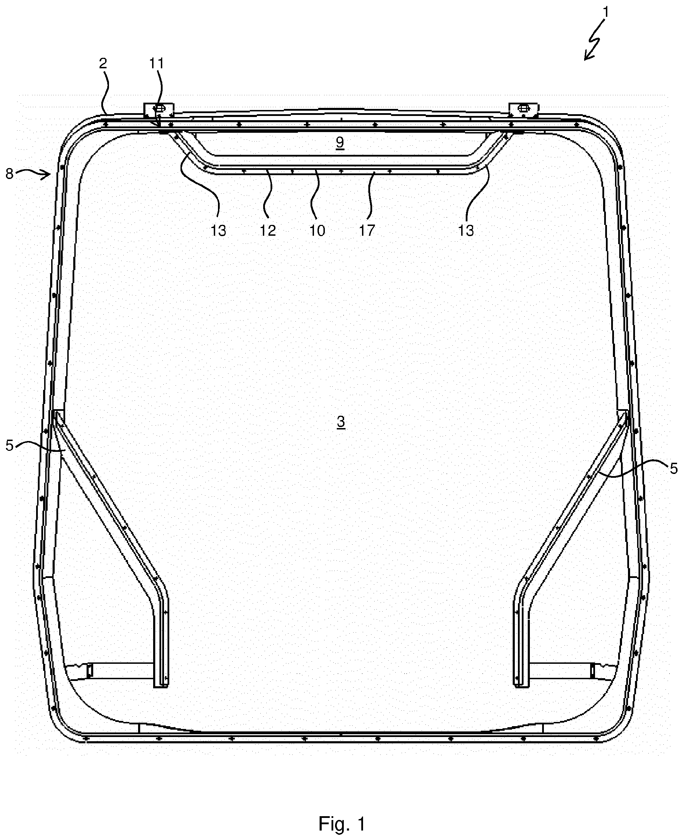

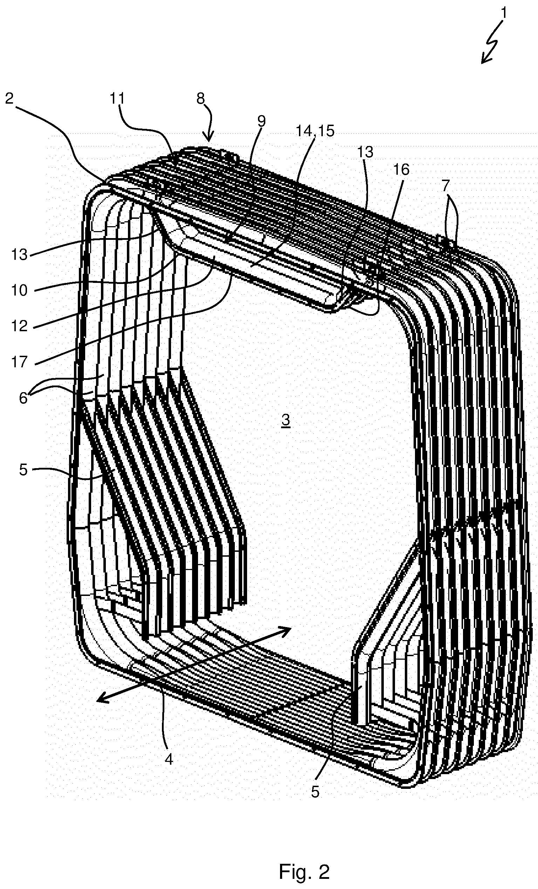

In den Figuren 1 und 2 ist eine Ausführungsform einer erfindungsgemäßen Übergangseinrichtung 1 gezeigt. Die Übergangseinrichtung 1 umfasst einen umlaufend geschlossenen Balg 2, wodurch ein Durchgangsbereich 3 geschaffen wird, durch den Passagiere zwischen zwei Fahrzeugen oder Fahrzeugteilen wechseln können. Dabei wird der Durchgangsbereich 3 nach unten hin durch einen in den Figuren 1 und 2 nicht dargestellte Übergangsplattform begrenzt, die die für die Passagiere begehbare Bodenfläche bildet. Um den zwischen der Übergangsplattform und dem Balg 2 gebildeten Spalt abzudecken, sind - in Durchgangsrichtung 4 gesehen - auf beiden Seiten Spaltabdeckungen 5 an dem Balg 2 vorgesehen.

Wie insbesondere in Figur 2 gezeigt, ist der Balg 2 als Wellenbalg mit mehreren hintereinander angeordneten Wellen 6 ausgebildet. Jede Welle 6 wird durch eine Bahn aus einem Balgmaterial, z. B. einem elastomerbeschichteten Textil, gebildet. Zwei benachbarte Wellen 6 sind durch jeweils einen Balgrahmen 7 erfasst und durch diesen miteinander verbunden. Bei dem in den Figuren 1 und 2 dargestellten Ausführungsbeispiel weisen die Wellen 6 des Balgs 2 eine - vom Durchgangsbereich 3 aus gesehen - konvexe Form auf.

Im Deckenbereich 8 der Übergangseinrichtung 1 befindet sich ein Verbindungskanal 9. Durch den Verbindungskanal 9 kann eine Verbindung zwischen zwei an den gegenüberliegenden Stirnseiten der Übergangseinrichtung 1 endenden Versorgungskanälen geschaffen werden. Durch den Verbindungskanal 9 kann beispielsweise Luft von einem Fahrzeugteil zum nächsten Fahrzeugteil geführt werden. Dazu ist der Verbindungskanal 9 idealerweise luftdicht von dem Durchgangsbereich 3 abgetrennt. Es kann jedoch auch ein Luftaustausch mit dem Durchgangsbereich 3 bis zu einem gewissen Umfang toleriert werden.

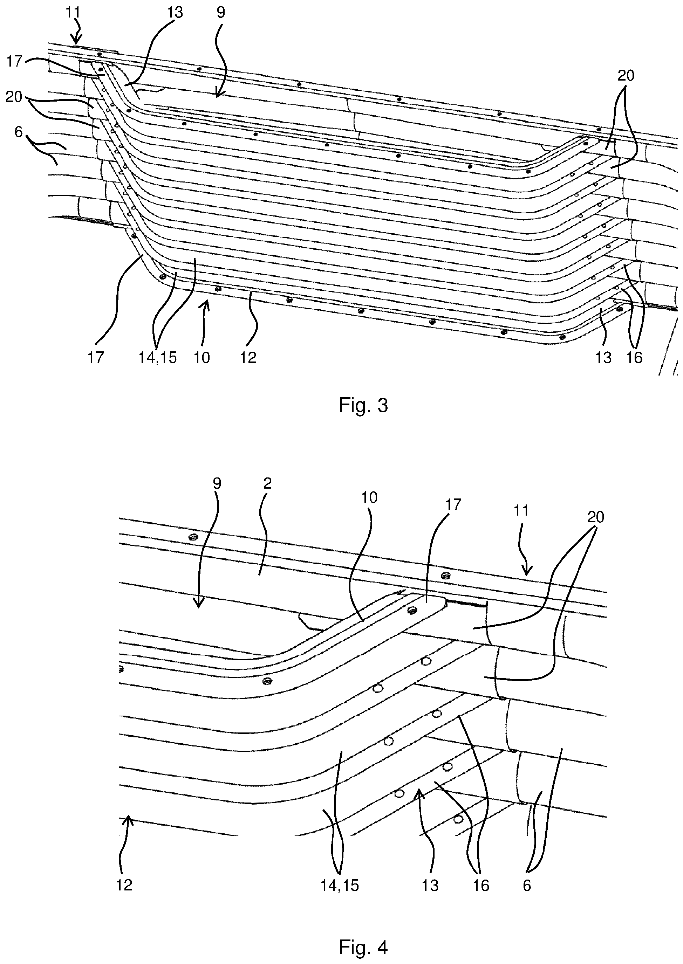

Um den Verbindungskanal 9 von dem Durchgangsbereich 3 abzutrennen, ist eine Abdeckung 10 vorgesehen, die separat von dem Balg 2 ausgebildet und auf der Innenseite des Balgs 2 an seinem Deckenabschnitt 11 angeordnet ist. In den Figuren 3 bis 5 ist die Abdeckung 10 und deren Befestigung an dem Deckenabschnitt 11 des Balgs 2 detailliert dargestellt. Die Abdeckung 10 umfasst ein Deckenelement 12 und zwei seitlich davon abragende Seitenwandelemente 13. Die Seitenwandelemente 13 schließen dabei direkt an das Deckenelemente 12 an und bilden den Anschluss an den Deckenabschnitt 11 des Balgs 2. Insgesamt wird der Verbindungskanal 9 somit von dem Deckenelement 12, den seitlich abragenden Seitenwandelementen 13 und dem Balg 2 bzw. dessen Deckenabschnitt 11 begrenzt.

Die Abdeckung 10 umfasst mehrere Bahnen 14 aus Balgmaterial mit einer Wellenform, so dass mehrere hintereinander angeordnete Wellen 15 gebildet werden. Die Wellenform entspricht dabei im Wesentlichen der Wellenform der Wellen 6 des Balgs 2, wodurch die Abdeckung 10 ähnliche mechanische und dynamische Eigenschaften aufweist wie der Balg 2. Benachbarte Bahnen 14 sind jeweils klemmend durch einen Halterahmen 16 der Abdeckung 10 erfasst und werden so miteinander verbunden. In Durchgangsrichtung 4 gesehen sind an beiden Stirnseiten der Abdeckung 10 Anschraubrahmen 17 vorgesehen, durch die die Abdeckung 10 an den Stirnseiten der Fahrzeugteile befestigt werden kann, so dass ein möglichst dichter Anschluss an die dort endenden Versorgungskanäle geschaffen werden kann. Sowohl die Halterahmen 16 als auch die Anschraubrahmen 17 sind im Wesentlichen U-förmig ausgebildet. Somit ergibt sich insgesamt eine haubenartige Form der Abdeckung 10 mit einem in etwa U-förmigen Querschnitt.

Die Bahnen 14 aus Balgmaterial sind jeweils durchgehend ausgebildet und bilden jeweils den entsprechenden Abschnitt der beiden Seitenwandelemente 13 und des Deckenelements 12. Anders als in Figur 3 dargestellt, kann jede Welle 15 der Abdeckung 10 aus mehreren Bahnen aus Balgmaterial aufgebaut sein, welche miteinander vernäht sind.

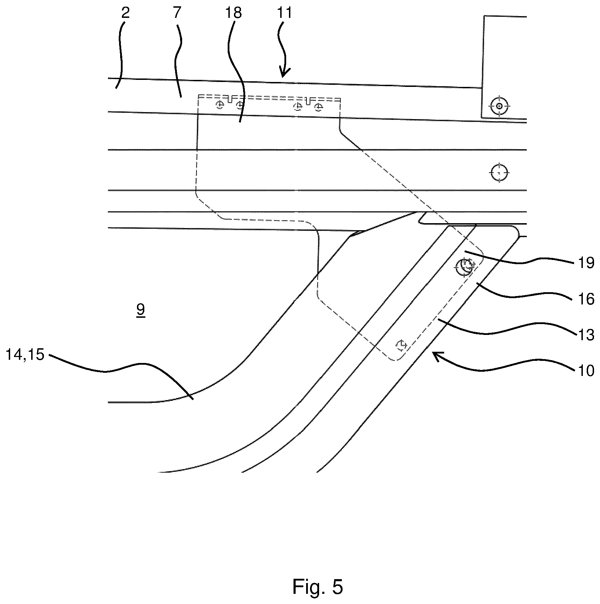

Um die Abdeckung 10 an dem Balg 2 zu befestigen, sind Haltebleche 18 vorgesehen. Diese sind zum einen an den Balgrahmen 7 befestigt. Z. B. können die Haltebleche bei der Fertigung des Balgs 2 in die Balgrahmen 7 eingeschoben werden und durch Klemmen und/oder Nieten mit diesen verbunden werden. Dabei steht ein Befestigungsabschnitt 19 für die Befestigung der Abdeckung 10 über den Balg 2 über. So kann die Übergangseinrichtung 1 zunächst ohne die Abdeckung 10 installiert werden. Die Abdeckung 10 kann im Nachgang an den Befestigungsabschnitten 19 befestigt werden. Dazu wird eine Verbindung zwischen den Halterahmen 16 und den Halteblechen 18 geschaffen. In Figur 5 ist beispielhaft die Verbindung mittels Nieten gezeigt.

Wie voranstehend erwähnt, wird durch die Seitenwandelemente 13 der Anschluss der Abdeckung 10 an den Deckenabschnitt 11 des Balgs 2 und so ein seitlicher Abschluss des Verbindungskanals 9 geschaffen. Für einen möglichst dichten Anschluss sind bei dem in den Figuren 3 und 4 dargestellten Ausführungsbeispiel in den seitlichen Endbereichen der Abdeckung 10 jeweils Dichtungsabschnitte 20 vorgesehen. Diese werden integral von den Bahnen 14 aus Balgmaterial ausgebildet und sind stulpenartig aus den Wellen 15 der Abdeckung 10 ausgeformt. Die jeweilige Welle 15 klappt im Übergangsbereich zu dem Dichtungsabschnitt 20 sozusagen um, so dass sich die Form der Welle 15 hier von einer - von dem Durchgangsbereich 3 aus gesehen - konkaven Form in eine konvexe Form ändert. Die Dichtungsabschnitt 11 weisen dabei eine den Wellen 6 des Balgs 2 entsprechende Form auf. Im montierten Zustand liegen die Dichtungsabschnitte 20 direkt auf den Wellen 6 des Balgs 2 auf. Durch den Materialüberlapp und das direkte Aufliegen kann ein dichter oder zumindest nahezu dichter Anschluss der Abdeckung an den Balg 2 geschaffen werden. Zusätzlich kann - anders als in den Figuren 3 und 4 dargestellt - im Anschlussbereich ein Dichtmittel vorgesehen sein. Z. B. kann vor der Montage der Abdeckung 10 in dem Anschlussbereich ein streichfähiges Dichtmittel aufgetragen werden, gegen das anschließend der Dichtungsabschnitt gepresst wird. Eine weitere Möglichkeit ist, dass nach erfolgter Montage im Bereich der Kante des Dichtungsabschnitts 11 ein streichfähiges Dichtmittel aufgetragen wird.

### Bezugszeichenliste:

- 1: Übergangseinrichtung
- 2: Balg
- 3: Durchgangsbereich
- 4: Durchgangsrichtung
- 5: Spaltabdeckung
- 6: Welle
- 7: Balgrahmen
- 8: Deckenbereich
- 9: Verbindungskanal
- 10: Abdeckung
- 11: Deckenabschnitt
- 12: Deckenelement
- 13: Seitenwandelement
- 14: Bahn
- 15: Welle
- 16: Halterahmen
- 17: Anschraubrahmen
- 18: Halteblech
- 19: Befestigungsabschnitt
- 20: Dichtungsabschnitt

## Patentansprüche

1. Übergangseinrichtung (1) zur Anordnung zwischen zwei beweglich miteinander verbundenen Fahrzeugen oder Fahrzeugteilen mit
- einem einen Durchgangsbereich (3) umschließenden Balg (2) und
- einem Verbindungskanal (9) zum Verbinden von an der Übergangseinrichtung (1) endenden Versorgungskanälen der Fahrzeuge oder Fahrzeugteile, der im Deckenbereich (8) der Übergangseinrichtung (1) angeordnet ist und von dem Durchgangsbereich (3) abgetrennt ist, und
wobei
- der Verbindungskanal (9) durch eine Abdeckung (10) begrenzt ist, die ein Deckenelement (12) und - quer zur Durchgangsrichtung (4) der Übergangseinrichtung (1) gesehen - seitlich davon abragende Seitenwandelemente (13) aufweist, welche sich bis zu einem Deckenabschnitt (11) des Balgs (2) erstrecken und derart an den Deckenabschnitt (11) des Balgs (2) angeschlossen sind, dass der Verbindungskanal (9) umlaufend geschlossen ist, **dadurch gekennzeichnet, dass** die Abdeckung (10)
- als eine von dem Balg (2) separate Haube ausgebildet ist und
- durch ein oder mehrere Verbindungsmittel lösbar mit einem oder mehreren Balgrahmen (7) des Balges (2) verbunden ist
und
- jedes Seitenwandelement (13) einen Dichtungsabschnitt (20) umfasst, der derart mit dem Deckenabschnitt (11) des Balgs (2) überlappt, dass der Verbindungskanal (9) seitlich geschlossen ist.

2. Übergangseinrichtung (1) nach Anspruch 1, **dadurch gekennzeichnet, dass** die Abdeckung (10) innerhalb des von dem Balg (2) umschlossenen Bereichs angeordnet ist und die Seitenwandelemente (13) auf einer innenliegenden Seite an dem Deckenabschnitt (11) des Balgs (2) angeschlossen sind.

3. Übergangseinrichtung (1) nach einem der vorhergehenden Ansprüche, **dadurch gekennzeichnet, dass** die Abdeckung (10) eine Mehrzahl von Bahnen (14) aus Balgmaterial aufweist, welche das Deckenelement (12) und die Seitenwandelemente (13) bilden und welche insbesondere eine dem Balg (2) entsprechende Wellen- oder Faltenform aufweisen.

4. Übergangseinrichtung (1) nach Anspruch 3, **dadurch gekennzeichnet, dass** die Abdeckung 10) eine Mehrzahl von insbesondere etwa U-förmig verlaufenden Halterahmen (16) umfasst, wobei zwei benachbarte Halterahmen (16) jeweils eine Bahn (14) aus Balgmaterial aufnehmen.

5. Übergangseinrichtung (1) nach einem der vorherigen Ansprüche, **dadurch gekennzeichnet, dass** die Dichtungsabschnitte (20) von den Bahnen (14) aus Balgmaterial ausgebildet sind, wobei die Bahnen (14) aus Balgmaterial insbesondere von dem einen Dichtungsabschnitt (20) bis zum dem anderen Dichtungsabschnitt (20) durchgehend und/oder einstückig ausgebildet sind.

6. Übergangseinrichtung (1) nach einem der vorherigen Ansprüche, **dadurch gekennzeichnet, dass** die Dichtungsabschnitte (20) der Grundkontur des Balges (2) folgend auf dem Balg (2) wellen- oder faltenförmig aufliegen.

7. Übergangseinrichtung (1) nach einem der vorherigen Ansprüche, **dadurch gekennzeichnet, dass** die Wellen- oder Faltenform der Dichtungsabschnitte (20) entgegengesetzt orientiert ist zu der Wellen- oder Faltenform des sich jeweils daran anschließenden Abschnitts der Bahn (14) aus Balgmaterial.

8. Übergangseinrichtung (1) nach einem der vorhergehenden Ansprüche, **dadurch gekennzeichnet, dass** ein Dichtmittel zur abdichtenden Verbindung des Seitenwandelements (13) und insbesondere des Dichtungsabschnitts (20) mit dem Balg (2) vorgesehen ist.

9. Übergangseinrichtung (1) nach einem der vorherigen Ansprüche, **dadurch gekennzeichnet, dass** die Abdeckung (10) eine der Zahl an Balgrahmen (7) entsprechende Zahl an Halterahmen (16) aufweist und jeder Balgrahmen (7) mindestens ein Verbindungsmittel aufweist zum Verbinden des Balgrahmens (7) mit einem zugeordneten Halterahmen (16).

10. Übergangseinrichtung (1) nach Anspruch 9, **dadurch gekennzeichnet, dass** das Verbindungsmittel ein Halteblech (18) ist, wobei optional das Halteblech (18) von dem Balgrahmen (7) abragt und der Halterahmen (16) an einem abragenden Befestigungsabschnitt (19) des Halteblechs (18) befestigt ist.

11. Übergangseinrichtung (1) nach einem der vorhergehenden Ansprüche, **dadurch gekennzeichnet, dass** die Abdeckung (10) in Durchgangsrichtung (4) gesehen stirnseitig einen Anschraubrahmen (17) aufweist zum Befestigen der Abdeckung (10) an einer Stirnseite des Fahrzeugs oder Fahrzeugteils.

## Claims

1. Transition device (1) for arranging between two vehicles or vehicle parts movably connected to each other, comprising
- a bellows (2) enclosing a passage area (3) and
- a connecting duct (9) for connecting supply ducts, terminating at the transition device (1), of the vehicles or vehicle parts, which connecting duct is arranged in the ceiling area (8) of the transition device (1) and is separated from the passage area (3), and
wherein
- the connecting duct (9) is delimited by a cover (10) which has a ceiling element (12) and - viewed transversely to the passage direction (4) of the transition device (1) - side wall elements (13) which project laterally therefrom, extend to a ceiling portion (11) of the bellows (2) and are connected to the ceiling portion (11) of the bellows (2) in such a way that the connecting duct (9) is closed circumferentially,
**characterized in that** the cover (10)
- is designed as a cap separate from the bellows (2) and
- is detachably connected to one or more bellows' frames (7) of the bellows (2) by one or more connecting means
and
- each side wall element (13) comprises a sealing portion (20) which overlaps with the ceiling portion (11) of the bellows (2) in such a way that the connecting duct (9) is closed laterally.

2. Transition device (1) according to claim 1, **characterized in that** the cover (10) is arranged within the area enclosed by the bellows (2) and the side wall elements (13) are connected on an inner side to the ceiling portion (11) of the bellows (2).

3. Transition device (1) according to either of the preceding claims, **characterized in that** the cover (10) has a plurality of webs (14) made of bellows material which form the ceiling element (12) and the side wall elements (13) and which in particular have a corrugated or folding shape corresponding to the bellows (2).

4. Transition device (1) according to claim 3, **characterized in that** the cover 10) comprises a plurality of in particular approximately U-shaped retaining frames (16), wherein two adjacent retaining frames (16) accommodate in each case one web (14) made of bellows material.

5. Transition device (1) according to any of the preceding claims, **characterized in that** the sealing portions (20) are formed from the webs (14) made of bellows material, wherein the webs (14) made of bellows material are formed in particular continuously and/or in one piece from one sealing portion (20) to the other sealing portion (20).

6. Transition device (1) according to any of the preceding claims, **characterized in that** the sealing portions (20) bear against the bellows (2) in a corrugated or folded manner so as to follow the basic contour of the bellows (2).

7. Transition device (1) according to any of the preceding claims, **characterized in that** the corrugated or folding shape of the sealing portions (20) is oriented in the opposite direction to the corrugated or folding shape of the relevant adjoining portion of the web (14) made of bellows material.

8. Transition device (1) according to any of the preceding claims, **characterized in that** a sealing agent is provided for sealingly connecting the side wall element (13) and in particular the sealing portion (20) to the bellows (2).

9. Transition device (1) according to any of the preceding claims, **characterized in that** the cover (10) has a number of retaining frames (16) corresponding to the number of bellows' frames (7) and each bellows' frame (7) has at least one connecting means for connecting the bellows' frame (7) to an associated retaining frame (16).

10. Transition device (1) according to claim 9, **characterized in that** the connecting means is a retaining plate (18), wherein optionally the retaining plate (18) projects from the bellows' frame (7) and the retaining frame (16) is fastened to a projecting fastening portion (19) of the retaining plate (18).

11. Transition device (1) according to any of the preceding claims, **characterized in that** the cover (10) has a screw-on frame (17) on its end face, when viewed in the passage direction (4), for fastening the cover (10) to an end face of the vehicle or vehicle part.

## Revendications

1. Dispositif d'intercirculation (1) destiné à être disposé entre deux véhicules ou parties de véhicule reliés entre eux de manière mobile, comportant
- un soufflet (2) entourant une zone de passage (3) et
- un canal de liaison (9) pour la liaison de canaux d'alimentation des véhicules ou des parties de véhicule se terminant au niveau du dispositif d'intercirculation (1), lequel canal de liaison est disposé dans la zone de plafond (8) du dispositif d'intercirculation (1) et est séparé de la zone de passage (3), et
dans lequel
- le canal de liaison (9) est délimité par un moyen de recouvrement (10) qui présente un élément formant plafond (12) et, vus transversalement à la direction de passage (4) du dispositif d'intercirculation (1), des éléments formant parois latérales (13) dépassant latéralement de celui-ci, lesquels s'étendent jusqu'à une section de plafond (11) du soufflet (2) et sont raccordés à la section de plafond (11) du soufflet (2), de telle sorte que le canal de liaison (9) est fermé sur toute la circonférence, **caractérisé en ce que** le moyen de recouvrement (10)
- est conçu comme un capot séparé du soufflet (2) et
- est relié de manière amovible à un ou plusieurs cadres de soufflet (7) du soufflet (2) par un ou plusieurs moyens de liaison
et
- chaque élément formant paroi latérale (13) comprend une section d'étanchéité (20) qui chevauche la section de plafond (11) du soufflet (2) de telle sorte que le canal de liaison (9) est fermé latéralement.

2. Dispositif d'intercirculation (1) selon la revendication 1,
**caractérisé en ce que** le moyen de recouvrement (10) est disposé à l'intérieur de la zone entourée par le soufflet (2) et les éléments formant parois latérales (13) sont raccordés à la section de plafond (11) du soufflet (2) sur un côté intérieur.

3. Dispositif d'intercirculation (1) selon l'une des revendications précédentes, **caractérisé en ce que** le moyen de recouvrement (10) présente une pluralité de bandes (14) en un matériau de soufflet qui forment l'élément formant plafond (12) et les éléments formant parois latérales (13) et qui présentent en particulier une forme ondulée ou plissée correspondant au soufflet (2).

4. Dispositif d'intercirculation (1) selon la revendication 3,
**caractérisé en ce que** le moyen de recouvrement (10) comprend une pluralité de cadres de maintien (16) s'étendant en particulier approximativement en forme de U, dans lequel deux cadres de maintien (16) voisins reçoivent respectivement une bande (14) en un matériau de soufflet.

5. Dispositif d'intercirculation (1) selon l'une des revendications précédentes, **caractérisé en ce que** les sections d'étanchéité (20) sont réalisées par les bandes (14) en un matériau de soufflet, dans lequel les bandes (14) en un matériau de soufflet sont en particulier réalisées de manière à être continues et/ou en une seule pièce depuis une section d'étanchéité (20) jusqu'à l'autre section d'étanchéité (20).

6. Dispositif d'intercirculation (1) selon l'une des revendications précédentes, **caractérisé en ce que** les sections d'étanchéité (20) reposent sur le soufflet (2) sous forme d'ondulations ou de plis en suivant le contour de base du soufflet (2).

7. Dispositif d'intercirculation (1) selon l'une des revendications précédentes, **caractérisé en ce que** la forme ondulée ou plissée des sections d'étanchéité (20) est orientée de manière opposée à la forme ondulée ou plissée de la section de la bande (14) en un matériau de soufflet qui s'y raccorde respectivement.

8. Dispositif d'intercirculation (1) selon l'une des revendications précédentes, **caractérisé en ce qu'**un moyen d'étanchéité est prévu pour la liaison de manière étanche de l'élément formant paroi latérale (13), et en particulier de la section d'étanchéité (20), au soufflet (2).

9. Dispositif d'intercirculation (1) selon l'une des revendications précédentes, **caractérisé en ce que** le moyen de recouvrement (10) présente un nombre de cadres de maintien (16) correspondant au nombre de cadres de soufflet (7) et chaque cadre de soufflet (7) présente au moins un moyen de liaison pour la liaison du cadre de soufflet (7) à un cadre de maintien (16) associé.

10. Dispositif d'intercirculation (1) selon la revendication 9,
**caractérisé en ce que** le moyen de liaison est une tôle de maintien (18), dans lequel, éventuellement, la tôle de maintien (18) fait saillie à partir du cadre de soufflet (7) et le cadre de maintien (16) est fixé à une section de fixation (19) en saillie de la tôle de maintien (18).

11. Dispositif d'intercirculation (1) selon l'une des revendications précédentes, **caractérisé en ce que** le moyen de recouvrement (10), vu dans la direction de passage (4), présente côté frontal un cadre de vissage (17) pour la fixation du moyen de recouvrement (10) sur un côté frontal du véhicule ou de la partie de véhicule.
